# FASCICULE DE BREVET EUROPEEN

(11) **EP 0 645 284 B1**
(45) Date de publication et mention de la délivrance du brevet: **05.02.1997**
(21) Numéro de dépôt: 94490042.2
(22) Date de dépôt: 23.09.1994
(51) Int. Cl.: B60R 9/06, B60R 9/10

(54) **Porte-vélo**
Fahrradträger
Bicycle carrier

(30) Priorité: 29.09.1993 FR 9311868
(43) Date de publication de la demande: 29.03.1995
(73) Titulaire: Société Anonyme MOTTEZ, F-59280 Armentieres (Nord) (FR)
(72) Inventeur: Mottez, Frédéric, F-59160 Capinghem (FR)
(74) Mandataire: Ecrepont, Robert Pierre

(56) Documents cités:
- EP-A- 0 470 683
- DE-U- 9 109 650
- DE-U- 9 303 486
- DE-U- 9 400 718
- GB-A- 2 255 943
- US-A- 4 085 874
- US-A- 4 428 516
- US-A- 5 135 145
- US-A- 5 211 323

## Description

L'invention se rapporte à un dispositif dit porte-vélo, pour le transport d'au moins une bicyclette sensiblement contre la face apparente arrière d'un véhicule automobile et approximativement transversalement au dit véhicule.

Les termes "véhicule automobile" désignent ici, notamment, mais non exclusivement, un véhicule automobile de tourisme comprenant un pavillon présentant une face supérieure et avantageusement, mais non limitativement, un pare-chocs arrière, situé sensiblement à mi-hauteur des roues arrières du véhicule.

Par les termes "face arrière d'un véhicule automobile", on comprendra les éléments qui constituent la face apparente de l'arrière d'un véhicule et qui s'étendent entre un plan situé sous le niveau habituel d'un pare-chocs arrière et un plan tangent à la face supérieure du pavillon du véhicule.

L'état de la technique dans le domaine des porte-vélos de ce type recèle de nombreux dispositifs comprenant une structure destinée à constituer une interface entre la face arrière de la carrosserie d'un véhicule et les différents organes d'au moins une bicyclette de manière à en permettre le transport, notamment, sans contact direct avec les éléments de la carrosserie qui constituent ladite face arrière.

Pour illustration, on pourra se reporter aux documents US-A-3.710.999, US-A-3.927.811, US-A-4.428.516, US-A-4.518.108, US-A-4.518.108, FR-A-2.668.435, GB-2.255.943.

Chaque structure d'un dispositif de ce type porte généralement :
- un moyen d'appui de ladite structure sur la face arrière d'un véhicule,
- un moyen de fixation démontable de la structure contre ladite face arrière,
- des moyens de soutien et d'arrimage d'au moins une bicyclette sur la dite structure.

D'une manière générale la structure comprend classiquement au moins deux pièces qui, d'une part, sont chacune constituée par un élément en forme de U, c'est à dire un élément comportant deux branches approximativement parallèles reliées par une branche médiane qui leur est sensiblement perpendiculaire et, d'autre part, sont, par un moyen d'articulation indexé, articulées entre elles par leurs branches parallèles de manière telle que leurs branches médianes puissent être écartées ou rapprochées en restant sensiblement parallèles, quelque soit la position d'articulation des deux pièces.

Classiquement, le moyen d'appui comprend des éléments d'appui, tels des patins, qui sont répartis sur les deux pièces articulées pour réaliser au moins deux groupes distincts de deux points d'appui dans chacun desquels groupes lesdits points sont largement espacés transversalement au véhicule et constituent, notamment, un groupe inférieur destiné à prendre appui sur la carrosserie approximativement au niveau du pare-chocs du véhicule et un groupe supérieur destiné à prendre appui sur la carrosserie à distance notable au dessus dudit pare-chocs.

Le fait que les deux pièces en U de la structure soient articulées entre elles permet à la structure d'échapper à une forme anguleuse de la face arrière.

D'une manière générale, celle des pièces en U qui est destinée à prendre appui au niveau du pare-chocs a ses branches parallèles qui sont identiquement coudées et ce chacune dans un plan perpendiculaire à la branche médiane qui les relie.

Ces particularités des branches parallèles de la pièce en U destinée à prendre appui au niveau du pare-chocs permet de renforcer l'aptitude du dispositif à échapper à une forme saillante de la face arrière du véhicule.

De manière également classique, le moyen de fixation démontable comprend des sangles qui, chacune équipée d'un dispositif de tension, ont l'une de leurs extrémités qui est reliée à la structure et leur autre extrémité qui est équipée d'un organe d'accrochage au bord d'un élément de carrosserie.

Dans le cas du document US-A-4.428.516, le moyen de soutien est constitué par deux segments libres de branches parallèles d'une troisième pièce en U, lesquels segments sont équipés de garnitures en matériau élastiquement déformable.

En observant ce dernier dispositif de profil, on constate que la distance comprise entre, d'une part, le point de jonction de chaque branche support du moyen de soutien à une pièce d'appui sur le véhicule et, d'autre part, le point d'articulation de cette pièce d'appui sur une autre pièce d'appui, est notablement supérieure à la distance qui sépare chaque point d'articulation de ces pièces entre elles de leur point d'appui sur un élément de carosserie du véhicule.

De ce fait, le dispositif du document US-4.428.516 présente une faible adaptabilité aux différentes formes de carosserie automobile, à fortiori s'il devait prendre appui sur des éléments inférieurs de carosserie tels un pare-choc.

En ce qui concerne le moyen d'arrimage d'au moins une bicyclette sur la structure, il consiste généralement en des sangles.

Les dispositifs porte-vélos connus ont leurs avantages, mais on leur reproche de positionner la bicyclette transportée dans une situation qui, en général, masque au moins partiellement les équipements de signalisation du véhicule et notamment la plaque minéralogique.

En effet, conformément à la législation, les véhicules automobiles portent notamment à l'arrière, des feux de signalisation et une plaque minéralogique qui, en général, situés sensiblement au dessus du pare-chocs, doivent demeurer parfaitement visibles en toute circonstance de l'utilisation du véhicule.

Pour éviter d'être en infraction totale, les utilisateurs de porte-vélos équipent leur chargement d'une plaque minéralogique supplémentaire, qu'ils placent de manière incontestablement lisible.

Cette parade semble, pour l'instant, tolérée par les autorités, mais reste très contestable car les feux de signalisation sont toujours, quant à eux, au moins partiellement masqués.

Le document GB-2.255.943 décrit un dispositif porte-vélo conforme au préambule de la revendication 1, pour le transport d'au moins une bicyclette sensiblement contre la face arrière d'un véhicule automobile et approximativement transversalement à ce véhicule.

Le dispositif du document GB-2.255.943 comprend une structure destinée à constituer une interface entre la face arrière de la carrosserie du véhicule et les différents organes d'au moins une bicyclette de manière à en permettre le transport notamment sans contact direct avec les éléments de la carrosserie qui constituent la dite face arrière.

La structure du dispositif comprend notamment deux pièces qui, d'une part, sont chacune constituées par un élément en forme de U, c'est à dire un élément comportant deux montants approximativement parallèles reliés par une branche médiane qui leur est sensiblement perpendiculaire et, d'autre part, sont par un moyen d'articulation indexée, articulées entre elles autour d'un axe par leurs montants de manière telle que leurs branches médianes puissent être écartées ou rapprochées en restant sensiblement parallèles quelle que soit la position d'articulation des deux pièces.

L'une de ces pièces en U, dite pièce support, a une de ses extrémités destinée à être placée au niveau habituel d'un éventuel pare-chocs du véhicule et l'autre pièce en U, dite pièce d'écartement, est destinée à prendre appui sur la carrosserie à une distance notable au dessus du niveau habituel du pare-chocs.

Dans ce brevet GB-2.255.943, la pièce support est elle-même scindée en deux parties, une partie supérieure et une partie inférieure, reliées entre elles par articulation mais cela n'a d'autres buts que de faciliter le rangement et/ou le conditionnement du porte-vélo.

En utilisation, ces parties inférieure et supérieure sont bloquées en articulation entre elles par un moyen de verrouillage et ce montage est donc équivalent à un coude d'angle fixe.

La structure de ce dispositif comprend en outre un moyen de soutien et d'arrimage d'au moins une bicyclette sur la dite structure, le moyen de soutien comprenant deux bras longilignes.

Dans le dispositif du document GB-2.255.943, les montants de la pièce support sont prolongés au delà de l'axe d'articulation et le moyen de soutien est relié aux prolongements des montants de la pièce support en un point situé à une certaine distance de cet axe d'articulation et ce, vers l'opposé de l'extrémité de la pièce support destinée à être placée au niveau d'un éventuel pare-chocs arrière.

Le prolongement des dits montants de la pièce support est suffisant pour, tout en permettant l'appui de la pièce support sur une butée du véhicule, telle le pare-chocs arrière, surélever le moyen de soutien de sorte que la bicyclette est portée au dessus des équipements de signalisation du véhicule.

Le dispositif décrit dans le document GB-2.255.943 peut certes être monté sur différents types de véhicule mais, sans pour autant garantir la même stabilité et la même sécurité de transport sur tout type de véhicule.

Un résultat que l'invention vise à obtenir est un dispositif qui, tout en présentant une universalité d'emploi, c'est à dire une adaptabilité accrue à la géométrie de différents types de véhicules, garantit la protection de la carrosserie de ce véhicule et la sécurité du transport de par l'assise optimale qu'il peut trouver sur la carrosserie du véhicule.

Un autre résultat que l'invention vise à obtenir est un dispositif qui puisse être disposé au plus près de la face arrière du dit véhicule.

A cet effet, l'invention a pour objet un dispositif dit porte-vélo, pour le transport d'au moins une bicyclette sensiblement contre la face arrière d'un véhicule automobile et approximativement transversalement au véhicule, caractérisé en ce que les deux bras longilignes du moyen de soutien sont portés par la pièce support par le biais d'un second moyen d'articulation indexée autour d'un second axe sensiblement parallèle au premier axe et comprenant le dit point.

L'invention sera bien comprise à la lecture de la description ci-après faite à titre d'exemple non limitatif en regard du dessin ci-annexé qui représente schématiquement :

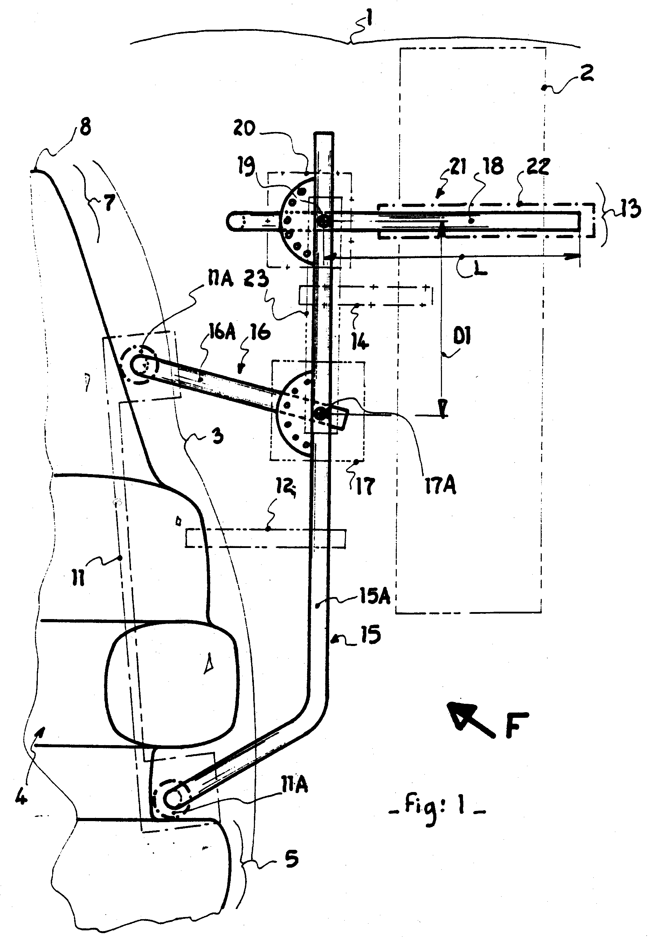

- figure 1 : une vue latérale d'un dispositif selon l'invention en cours d'utilisation sur une automobile,

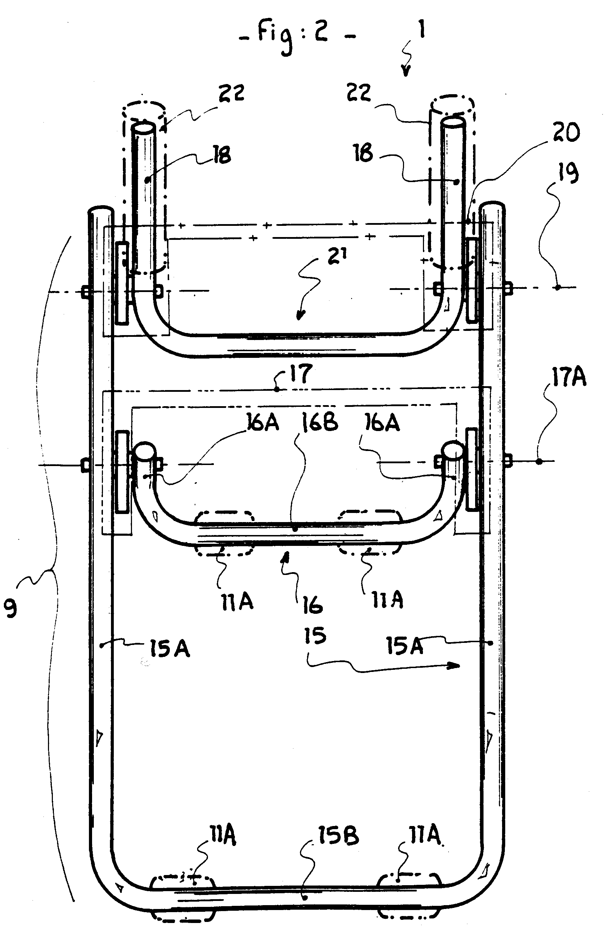

- figure 2 : une vue selon F du dispositif selon la figure 1.

En se reportant au dessin, on voit un dispositif 1, dit porte-vélo, pour le transport d'au moins une bicyclette 2 sensiblement contre la face arrière 3 d'un véhicule automobile 4 (partiellement représenté) et approximativement transversalement à ladite face.

Le véhicule automobile 4 comprend un pavillon 7 présentant une face supérieure 8 et, non limitativement, un pare-chocs arrière 5, situé sensiblement à mi-hauteur de ses roues arrières (non représentées).

La face arrière 3 est constituée par des éléments du véhicule qui s'étendent entre un plan situé sous le niveau habituel d'un pare-chocs arrière 5 et un plan tangent à la face supérieure 8 du pavillon 7 du véhicule 4.

Le dispositif 1 comprend une structure 9 destinée à constituer une interface entre la face arrière 3 de la carrosserie du véhicule 4 et les différents organes d'au moins une bicyclette 2 de manière à en permettre le transport, notamment, sans contact direct de cette dernière avec les éléments de la carrosserie qui constituent ladite face arrière.

Chaque structure 9 de ce type porte généralement :
- un moyen 11 d'appui de la dite structure 9 sur la face arrière 3 du véhicule 4,
- un moyen 12 de fixation démontable de la structure 9 contre la dite face arrière 3,
- des moyens 13, 14 de soutien et d'arrimage d'au moins une bicyclette 2 sur la dite structure 9.

La structure 9 comprend notamment deux pièces 15, 16 qui, d'une part, sont chacune constituées par un élément en forme de U, c'est à dire un élément comportant deux montants 15A, 16A approximativement parallèles, reliés par une branche médiane 15B, 16B qui leur est sensiblement perpendiculaire et, d'autre part, sont, par un premier moyen 17 d'articulation indexée, articulées entre elles par leurs montants 15A, 16A de manière telle que leurs branches médianes 15B, 16B puissent être écartées ou rapprochées en restant sensiblement parallèles, quelque soit la position d'articulation des deux pièces 15, 16 sur l'axe d'articulation 17A du moyen 17.

L'une 15 des pièces 15, 16 en U est dite pièce support du fait qu'elle est destinée à prendre appui sur le véhicule au niveau habituel d'un pare-chocs arrière 5 sur une butée constituée dans un plan sensiblement horizontal.

L'autre 16 des pièces 15, 16 en U est destinée à prendre appui sur la carrosserie à distance notable au dessus du niveau habituel du pare-chocs est dite pièce d'écartement.

Classiquement, le moyen 11 d'appui de la structure 9 sur la face arrière 3 du véhicule comprend des éléments d'appui 11A, tels des patins, qui sont répartis sur les deux pièces 15, 16 articulées pour réaliser deux groupes distincts d'au moins deux points d'appui dans chacun desquels groupes lesdits points sont largement espacés transversalement au véhicule 4 et constituent, notamment, un groupe inférieur destiné à prendre appui approximativement au niveau habituel d'un parechocs 5 arrière du véhicule 4 et un groupe supérieur destiné à prendre appui sur la carrosserie à distance notable au dessus dudit pare-chocs 5.

Tel que cela a déjà été annoncé, le fait que les deux pièces 15, 16 en U de la structure 9 soient articulées entre elles permet à la structure 9 d'échapper à une forme anguleuse de la face arrière 3.

De manière également classique, le moyen 12 de fixation (non représenté en détail) démontable comprend des sangles qui, chacune équipée d'un dispositif de tension, ont l'une de leurs extrémités qui est reliée à la structure et leur autre extrémité qui est équipée d'un organe d'accrochage au bord d'un élément de carrosserie.

Les montants 15A de la pièce support 15 sont prolongés au delà de l'articulation 17A avec la pièce d'écartement 16 et le moyen de soutien 13 est relié aux prolongements des montants 15A de la pièce 15 support en un point 19 situé à une certaine distance D1 de l'axe d'articulation 17, et ce, vers l'opposé de l'extrémité de la pièce support destinée à être placée au niveau d'un éventuel pare-chocs arrière.

Le prolongement est suffisant pour, tout en permettant l'appui de la pièce support 15 sur une butée du véhicule, telle le pare-chocs arrière, surélever le moyen de soutien 13 de sorte que la bicyclette est portée au dessus des équipements de signalisation du véhicule.

La pièce support 15 qui est destinée à prendre appui sur le véhicule au niveau habituel d'un pare-chocs arrière 5 sur une butée constituée dans un plan sensiblement horizontal, a ses montants 15A qui sont identiquement coudés et ce, chacun dans un plan perpendiculaire à la branche médiane 15B qui les relie.

De manière remarquable, les deux bras longilignes 18 du moyen 13 de soutien, dits bras de suspension, sont portés par la pièce 15 support par le biais d'un second moyen 20 d'articulation indexée autour d'un axe 19 sensiblement parallèle à celui 17A du premier moyen 17 d'articulation indexée des pièces 15, 16 de la structure qu'elles constituent.

Ces particularités techniques permettent d'obtenir le résultat visé par l'invention, c'est à dire d'obvier au masquage de la plaque minéralogique et des feux de signalisation portés par la face arrière 3 d'un véhicule 4 par la et/ou les bicyclettes portées par le dispositif.

De manière remarquable, dans leur partie rectiligne, les montants 15A de la pièce support ont, au delà du point 19 de liaison de chaque bras de soutien, une longueur supérieure au diamètre des roues de bicyclette d'adulte.

Cette particularité permet de garantir un appui des plus grandes bicyclettes sur toute la hauteur du cadre et donc de garantir leur écartement de la carosserie du véhicule automobile.

Classiquement le moyen 13 de soutien comprend deux bras 18.

De manière notable, la distance D1 comprise entre le point 19 de liaison de chaque bras de soutien et l'axe d'articulation 17A du moyen 17 d'articulation est comprise entre cent millimètres et six cent millimètres.

De manière également notable le dispositif comprend un moyen 23 de réglage de la distance D1 comprise entre le point 19 de liaison de chaque bras et l'axe d'articulation 17A du moyen 17 d'articulation.

De préférence, la distance D1 comprise entre le point 19 de liaison de chaque bras et l'axe d'articulation 17A du premier moyen 17 d'articulation est de quatre cent quarante millimètres.

Ainsi conçu, c'est à dire du fait de l'articulation indexée de la pièce support, d'une part, avec la pièce d'écartement et, d'autre part, avec les bras de suspension, le dispositif de l'invention présente une certaine universalité d'emploi, c'est à dire une adaptabilité accrue à la géométrie de différents types de véhicules en garantissant la protection de cette carosserie et la sécurité du transport de par l'assise optimale que peut trouver le dispositif et le réglage de l'inclinaison des bras support qui peut être effectuée précisément et séparément de celle des pièces d'appui sur la carrosserie.

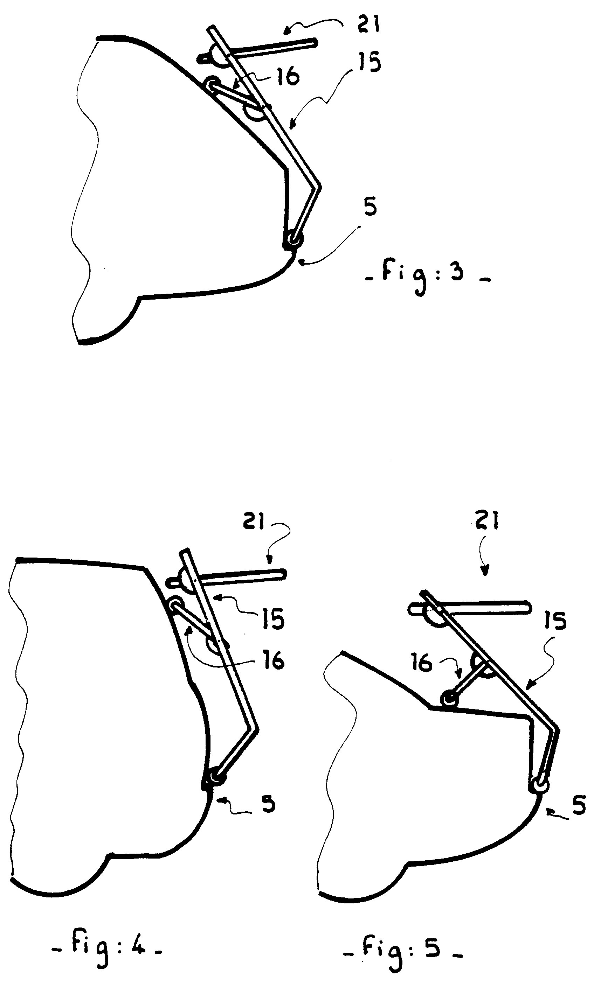

Notamment, le dispositif peut être disposé au plus près de la face arrière dudit véhicule (figures 3, 4, 5).

Le moyen 23 est de préférence mais non limitativement constitué par une pluralité de perçages réalisés dans les montants 15A, 15B et dans chacun desquels chacun des tourillons constituant l'axe d'articulation des moyens 17 d'articulation peut être amoviblement fixé.

De manière encore remarquable, les deux bras longilignes 18 dits de suspension sont constitués par des segments de deux branches parallèles d'une pièce 21 en U.

De manière préférentielle :
- dans leur partie sensiblement rectiligne destinée à supporter les bras longilignes 18, les montants 15A de la pièce support 15 ont une longueur de neuf cent trente millimètres,
- dans leur autre partie, c'est à dire dans leur partie destinée à porter l'appui sur la face arrière 3, les montants 15A de la pièce support 15 ont une longueur de deux cent trente millimètres,
- les montants 16A de la pièce 16 d'écartement ont une longueur de deux cent cinquante millimètres,
- les bras longilignes 18 du moyen 13 de soutien ont chacun une longueur de quatre cent millimètres.

Les différents moyens d'articulation indexée précités sont avantageusement, mais non limitativement, ceux décrits dans la demande de brevet français 2.668.435.

Avantageusement, les bras 18 sont recouverts d'un revêtement 22 élastiquement déformable.

L'examen des figures et, plus particulièrement, des figures 3 à 5 permet de constater l'adaptabilité du dispositif de l'invention et son aptitude à assurer la fonction de port de bicyclettes au dessus des feux de signalisation du véhicule lorsque ceux sont situés sensiblement au dessus du niveau pare-chocs du dit véhicule.

## Revendications

1. Dispositif (1) dit porte-vélo, pour le transport d'au moins une bicyclette (2) sensiblement contre la face arrière (3) d'un véhicule automobile (4) et approximativement transversalement au véhicule,
lequel véhicule automobile (4) comprend un pavillon (7) présentant une face supérieure (8) et non limitativement un pare-chocs arrière (5), situé sensiblement à mi-hauteur de ses roues arrières,
la face arrière (3) étant quant à elle constituée par des éléments du véhicule qui s'étendent entre un plan situé sous le niveau habituel d'un éventuel pare-chocs arrière (5) et un plan tangent à la face supérieure (8) du pavillon (7) du véhicule (4),
le dispositif (1) comprenant une structure (9) destinée à constituer une interface entre la face arrière (3) de la carrosserie du véhicule (4) et les différents organes d'au moins une bicyclette (2) de manière à en permettre le transport, notamment, sans contact direct avec les éléments de la carrosserie qui constituent ladite face arrière,
la structure (9) comprenant notamment deux pièces (15, 16) qui, d'une part, sont chacune constituées par un élément en forme de U, c'est à dire un élément comportant deux montants (15A, 16A) approximativement parallèles reliés par une branche médiane (15B, 16B) qui leur est sensiblement perpendiculaire et, d'autre part, sont, par un premier moyen (17) d'articulation indexée, articulées entre elles autour d'un premier axe (17A) par leurs montants (15A, 16A) de manière telle que leurs branches médianes (15B, 16B) puissent être écartées ou rapprochées en restant sensiblement parallèles, quelque soit la position d'articulation des deux pièces (15, 16),
dans cette structure (9), l'une (15) des dites pièces (15, 16) en U dite pièce support, ayant une de ses extrémités destinée à être placée au niveau habituel d'un éventuel pare-chocs (5) du véhicule et l'autre pièce (16) dite pièce 16 d'écartement étant destinée à prendre appui sur la carrosserie à une distance notable au dessus du niveau habituel du pare-chocs,
la structure comprenant en outre un moyen de soutien et d'arrimage (13) d'au moins une bicyclette (2) sur la dite structure, le moyen (13) de soutien comprenant deux bras longilignes (18),
les montants (15A) de la pièce support étant prolongés au delà du premier axe d'articulation (17A) et le moyen de soutien (13) étant relié aux prolongements des montants (15A) de la pièce (15) support en un point (19) situé à une certaine distance (D1) du premier axe d'articulation (17A) et ce, vers l'opposé de l'extrémité de la pièce support destinée à être placée au niveau d'un éventuel pare-chocs arrière,
le prolongement des dits montants (15A) de la pièce support (15) étant suffisant pour, tout en permettant l'appui de la pièce support (15) sur une butée du véhicule, telle le pare-chocs arrière, surélever le moyen de soutien (13) de sorte que la bicyclette est portée au dessus des équipements de signalisation du véhicule,
la pièce support (15), destinée à prendre appui sur le véhicule au niveau habituel d'un pare-chocs arrière (5) sur une butée constituée dans un plan sensiblement horizontal, a ses montants (15A) qui sont identiquement coudés et ce, chacun dans un plan perpendiculaire à la branche médiane (15B) qui les relie,
ce dispositif étant **CARACTERISE** en ce que les deux bras longilignes (18) du moyen (13) de soutien sont portés par la pièce (15) support par le biais d'un second moyen (20) d'articulation indexée autour d'un second axe (19) sensiblement parallèle au premier axe (17A) et comprenant le dit point (19).

2. Dispositif selon la revendications 1 comprenant un moyen (23) de réglage de la distance (D1) comprise entre le point (19) de liaison de chaque bras et l'axe d'articulation (17A) du premier moyen (17) d'articulation, ce dispositif étant **caractérisé** en ce que le moyen (23) est constitué par une pluralité de perçages réalisés dans les montants (15A, 15B) et dans chacun desquels chacun des tourillons constituant l'axe d'articulation du premier moyen (17) d'articulation peut être amoviblement fixé.

3. Dispositif selon la revendication 1 ou 2 **caractérisé** en ce que, dans leur partie rectiligne, les montants (15A) de la pièce support ont, au delà du point (19) de liaison de chaque bras de soutien, une longueur supérieure au diamètre des roues de bicyclette d'adulte.

4. Dispositif selon l'une quelconque des revendications 1 à 3 **caractérisé** en ce que la distance (D1) comprise entre le point (19) de liaison de chaque bras de soutien et l'axe d'articulation (17A) du premier moyen (17) d'articulation est comprise entre cent millimètres et six cent millimètres.

5. Dispositif selon l'une quelconque des revendications 1 à 4 **caractérisé** en ce que la distance (D1) comprise entre le point (19) de liaison de chaque bras de soutien et l'axe d'articulation (17A) du premier moyen (17) d'articulation est de quatre cent quarante millimètres.

6. Dispositif selon l'une quelconque des revendications 1 à 5 **caractérisé** en ce que :
- dans leur partie sensiblement rectiligne destinée à supporter les bras longilignes (18), les montants (15A) de la pièce support (15) ont une longueur de neuf cent trente millimètres,
- dans leur autre partie, c'est à dire dans leur partie destinée à porter l'appui sur la face arrière (3), les montants (15A) de la pièce support (15) ont une longueur de deux cent trente millimètres,
- les montants (16A) de la pièce (16) d'écartement ont une longueur de deux cent cinquante millimètres,
- les bras longilignes (18) du moyen 13 de soutien ont chacun une longueur de quatre cent millimètres.

## Claims

1. A cycle carrier device (1) for transporting at least one cycle (2) substantially against the rear face (3) of a motor vehicle (4) and approximately transversally to the vehicle,
which motor vehicle (4) includes a roof (7) having an upper face (8) and non-restrictively a rear bumper (5) situated substantially at mid-height of its rear wheels,
the rear face (3) for its part being constituted by elements of the vehicle which extend between a plane situated under the normal level of a possible rear bumper (5) and a plane tangent to the upper face (8) of the roof (7) of the vehicle (4),
the device (1) including a structure (9) intended to constitute an interface between the rear face (3) of the body of the vehicle (4) and the vanous components of at least one cycle (2) so as to enable the latter to be transported notably without any direct contact with the body elements constituting the said rear face,
the structure (9) notably including two pieces (15, 16) which on the one hand are each constituted by a U-shaped element, that is to say an element comprising two approximately parallel uprights (15A, 16A) connected by a median leg (15B, 16B) substantially perpendicular thereto, and on the other hand are - by a first indexed articulation device (17) - articulated relative to one another about a first axis (17A) via their uprights (15A, 16A) in such a way that their median legs (15B, 16B) can be moved apart or brought together whilst remaining substantially parallel, irrespective of the articulation position of the two pieces (15, 16),
in this structure (9), one (15) of the said U-shaped pieces (15, 16) - known as a support piece - having one of its ends intended to be placed at the normal level of a possible bumper (5) of the vehicle, and the other piece (16) - known as a distance piece - being intended to rest on the body at a considerable distance above the normal level of the bumper,
the structure including moreover a means (13) for supporting and stowing at least one cycle (2) on the said structure, the supporting means (13) comprising two elongate arms (18),
the uprights (15A) of the support piece being extended beyond the first articulation axis (17A) and the supporting means (13) being connected to the extensions of the uprights (15A) of the support piece (15) at a point (19) situated at a certain distance (D1) from the first articulation axis (17A) and at the opposite end from the end of the support piece intended to be placed at the level of a possible rear bumper,
while allowing the supporting of the support piece (15) on a stop of the vehicle, such as the rear bumper, the extension of the said uprights (15A) of the support piece (15) being sufficient to raise the supporting means (13) so that the cycle is brought above the signalling equipment of the vehicle,
the support piece (15) - intended to rest an the vehicle at the normal level of a rear bumper (5), on a stop formed in a substantially horizontal plane - has its uprights (15A) which are each identically bent in a plane perpendicular to the median leg (15B) connecting them,
this device being characterised in that the two elongate arms (18) of the supporting means (13) are borne by the support piece (15) by means of a second means (20) for indexed articulation about a second axis (19) substantially parallel to the first axis (17A) and comprising the said point (19).

2. A device in accordance with Claim 1, including a means (23) for adjusting the distance (D1) between the lying point (19) of each arm and the articulation axis (17A) of the first articulation means (17), this device being characterised in that the means (23) is constituted by a plurality of bores made in the uprights (15A, 15B [sic]), each of the trunnions constituting the articulation axis of the first articulation means (17) being able to be removably fixed in each of the bores.

3. A device in accordance with Claim 1 or 2, characterised in that the length of the rectilinear portion of the support-piece uprights (15A) beyond the linking point (19) of each supporting arm is greater than the diameter of the wheels of an adult cycle.

4. A device in accordance with any one of Claims 1 to 3, characterised in that the distance (D1) between the linking point (19) of each supporting arm and the articulation axis (17A) of the first articulation means (17) is between one hundred millimetres and six hundred millimetres.

5. A device in accordance with any one Claims 1 to 4, characterised in that the distance (D1) between the linking point (19) of each supporting arm and the articulation axis (17A) of the first articulation means (17) is four hundred and forty millimetres.

6. A device in accordance with any one of Claims 1 to 5, characterised in that:
- the length of the substantially rectilinear portion - intended to support the elongate arms (18) - of the uprights (15A) of the support piece (15) is nine hundred and thirty millimetres,
- the length of the other portion of the uprights (15A) of the support piece (15), that is to say the portion intended to rest on the rear face (3), is two hundred and thirty millimetres,
- the uprights (16A) of the distance piece (16) are two hundred and fifty millimetres in length,
- the elongate arms (18) of the supporting means (13) are each four hundred millimetres in length.

## Patentansprüche

1. Vorrichtung (1), sogenannter Fahrradhalter, zum Befördern mindestens eines Fahrrades (2) im wesentlichen in Anlage gegen die Rückseite (3) eines Kraftwagens (4) annähernd quer zum Fahrzeug,
wobei der Kraftwagen (4) ein Karosserieoberteil (7) mit einer Oberseite (8) und, ohne Einschränkung, mit einer rückwärtigen Stoßstange (5) aufweist, die im wesentlichen auf halber Höhe der Hinterräder angebracht ist,
wobei die Rückseite (3) ihrerseits aus Fahrzeugteilen besteht, die sich zwischen einer unterhalb der üblichen Höhe einer gegebenenfalls vorhandenen rückwärtigen Stoßstange (5) befindlichen Ebene und einer tangential zur Oberseite (8) des Karosserieoberteile (7) des Fahrzeugs (4) verlaufenden Ebene erstrecken,
wobei die Vorrichtung (1) eine Konstruktion (9) aufweist, die zur Bildung einer Schnittstelle zwischen der Rückseite (3) der Karosserie des Fahrzeugs (4) und den verschiedenen Bauteilen mindestens eines Fahrrades (2) bestimmt ist, um dessen Beförderung zu ermöglichen, vornehmlich ohne direkte Berührung mit den die Rückseite bildenden Karosserieteilen,
wobei die Konstruktion (9) insbesondere zwei Teile (15, 16) umfaßt, die einerseits jeweils aus einem U-förmigen Bauteil bestehen, d.h. einem Bauteil mit zwei in etwa parallelen Streben (15A, 16A) die über einen im wesentlichen senkrecht zu ihnen verlaufenden Mittelschenkel (15B, 16B) miteinander verbunden sind, und andererseits über eine erste positionierbare Anlenkeinrichtung (17) aneinander angelenkt und mit ihren Streben (15A, 16A) um eine erste Achse (17A) so verschwenkbar sind, daß ihre Mittelschenkel (15B, 16B) auseinander oder zueinander bewegbar sind und dabei unabhängig von der Schwenklage der beiden Teile (15, 16) im wesentlichen parallel bleiben,
wobei eines der Enden eines (15) der beiden U-förmigen Teile (15, 16) in dieser Konstruktion (9), das als Trägerteil bezeichnet wird, zur Anordnung auf der üblichen Höhe einer gegebenenfalls vorhandenen Stoßstange (5) des Fahrzeugs bestimmt ist, und das andere Teil (16), als Abstandshalteteil bezeichnet, zur Abstützung auf der Karosserie in einem deutlichen Abstand oberhalb der üblichen Höhe der Stoßstange vorgesehen ist,
wobei die Konstruktion darüberhinaus eine Halte- und Lastbefestigungseinrichtung (13) für mindestens ein Fahrrad (2) auf der Konstruktion aufweist, welche zwei langgestreckte Schenkel (18) besitzt,
wobei die Streben (15A) des Trägerteils über die erste Anlenkachse (17A) hinaus verlängert sind und die Halteeinrichtung (13) mit den Verlängerungen der Streben (15A) des Trägerteils (15) an einem Punkt (19) verbunden ist, der in einem gewissen Abstand (D1) von der ersten Anlenkachse (17A) liegt, und zwar in entgegengesetzter Richtung zum Ende des zur Anordnung auf Höhe einer gegebenenfalls vorhandenen rückwärtigen Stoßstange bestimmten Trägerteils,
wobei die Verlängerung der Streben (15A) des Trägerteils (15) lang genug ist, um die Halteeinrichtung (13) so hoch zu legen, daß das Fahrrad über den Signallichtern des Fahrzeugs gehalten wird, und dabei die Abstützung des Trägerteils (15) auf einem Anschlag am Fahrzeug wie z.B. der rückwärtigen Stoßstange gestattet,
wobei das zur Abstützung auf dem Fahrzeug auf der üblichen Höhe einer rückwärtigen Stoßstange (5) auf einem in einer im wesentlichen horizontalen Ebene gebildeten Anschlag bestimmte Trägerteil (15) Streben (15A) aufweist, die in identischer Weise gekrümmt sind, und zwar jeweils in einer zu dem sie verbindenden Mittelsteg (15B) senkrechten Ebene,
dadurch **GEKENNZEICHNET**, daß die beiden langgestreckten Schenkel (18) der Halteeinrichtung (13) sich unter Beaufschlagung durch eine zweite positionierbare Anlenkeinrichtung (20) zur Anlenkung um eine zweite, zur ersten Achse (17A) im wesentlichen parallele Achse (19), die den Verbindungspunkt (19) umfaßt, auf dem Trägerteil (15) abstützen.

2. Vorrichtung nach Anspruch 1, welche eine Einrichtung (23) zum Einstellen des Abstands (D1) zwischen dem Verbindungspunkt (19) jedes Schenkels und der Anlenkachse (17A) der ersten Anlenkeinrichtung (17) aufweist, dadurch **gekennzeichnet**, daß die Einrichtung (23) aus einer Vielzahl Bohrungen besteht, die in die Streben (15A, 15B) eingelassen sind und in welchen jeweils einer der Zapfen lösbar befestigbar ist, welche die Anlenkachse der ersten Anlenkeinrichtung (17) bilden.

3. Vorrichtung nach Anspruch 1 oder 2, dadurch **gekennzeichnet**, daß die Streben (15A) des Trägerteils jenseits des Verbindungspunktes (19) jedes Halteschenkels in ihrem geradlinigen Abschnitt eine Länge aufweisen, die größer ist als der Durchmesser der Räder eines Fahrrades in Ausführung für Erwachsene.

4. Vorrichtung nach einem der Ansprüche 1 bis 3, dadurch **gekennzeichnet**, daß der Abstand (D1) zwischen dem Verbindungspunkt (19) jedes Halteschenkels und der Anlenkachse (17A) der ersten Anlenkeinrichtung (17) zwischen einhundert Millimeter und sechshundert Millimeter beträgt.

5. Vorrichtung nach einem der Ansprüche 1 bis 4, dadurch **gekennzeichnet**, daß der Abstand (D1) zwischen dem Verbindungspunkt (19) jedes Halteschenkels und der Anlenkachse (17A) der ersten Anlenkeinrichtung (17) vierhundertvierzig Millimeter beträgt.

6. Vorrichtung nach einem der Ansprüche 1 bis 5, dadurch **gekennzeichnet**, daß:
- die Streben (15A) des Trägerteils (15) in ihrem wesentlichen geradlinigen Abschnitt zur Abstützung der langgestreckten Schenkel (18) vorgesehenen, im wesentlichen geradlinigen Abschnitt eine Länge von neunhundertdreißig Millimeter aufweisen,
- die Streben (15A) des Trägerteils (15) in ihrem anderen, d.h. in ihrem zur Abstützung auf der Rückseite (3) vorgesehenen, Abschnitt eine Länge von zweihundertdreißig Millimeter aufweisen,
- die Streben (16A) des Abstandshalteteils (16) eine Länge von zweihundertfünfzig Millimeter aufweisen,
- die langgestreckten Schenkel (18) der Halteeinrichtung (13) jeweils eine Länge von vierhundert Millimeter aufweisen.
